# EUROPEAN PATENT APPLICATION

(11) **EP 1 090 775 A1**
(43) Date of publication of application: **11.04.2001**
(21) Application number: 00308663.4
(22) Date of filing: 03.10.2000
(51) Int. Cl.: B41M 5/00, C08F 20/36, C08F 290/06, C08F 283/00, C08F 290/14, B42D 15/10

(54) **Image recording sheet comprising an active energy ray-curable composition**

(30) Priority: 04.10.1999 JP 28338099; 16.12.1999 JP 35674399
(71) Applicant: Oji Paper Company Limited, Tokyo 104-0061 (JP)
(72) Inventor: Minami, Takehiro, Ota-ku, Tokyo (JP); Ishiwata, Tadakazu, Chiba-shi, Chiba (JP); Takahashi, Yoshiyuki, Ota-ku, Tokyo (JP)
(74) Representative: Wright, Howard Hugh Burnby

(57) **Abstract**

An image recording sheet capable of being printed by conventional dye sublimation and hot melt ink thermal transfer printing procedures and having a high gloss and a high fuse adhesion resistance to the dye or ink sheet, has an image receiving layer formed on a substrate by curing a layer of an activation energy ray-curable compound of the formula (1): 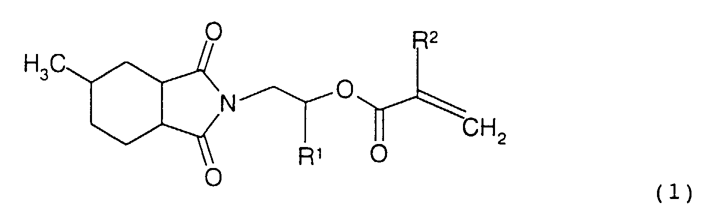 wherein R¹ and R² = H or a methyl group.

## Description

### BACKGROUND OF THE INVENTION

### 1. Field of the Invention

The present invention relates to an image recording sheet and method.

More particularly, the present invention relates to an image recording sheet for both a dye sublimation transfer printing procedure and a hot melt ink transfer printing and an image recording method using the sheet. Still more particularly, the present invention relates to an image recording sheet having an image receiving layer capable of recording thereon images with a high color density and a high clarity by printing it with both sublimating dyes by using a dye sublimation transfer printing procedure and hot melt inks by using a hot melt ink transfer printing procedure, and having a high resistance to melt adhesion phenomenon; and an image recording method using the sheet.

The image recording sheet and method of the present invention are useful for various types of cards, for example, magnetic cards and IC cards on which picture information, for example, photographic picture information and letter information must be recorded with a high clarity and a high color density.

### 2. Description of the Related Art

Currently, thermal printers, particularly thermal transfer printers which can record thereon clear full-colored images have drawn attention as practical printers. In a dye sublimation transfer printer, a sublimation transfer dye sheet having a dye layer containing a dye which can sublimate, or melt and diffuse and move by heating and a dye-receiving sheet comprising a film substrate and a dye-receiving layer formed on the surface of the film substrate and capable of receiving the dye from the dye sheet are employed in such a manner that the dye sheet is superposed on the dye-receiving sheet so that the dye layer of the dye sheet is brought into contact with the dye-receiving layer of the dye-receiving sheet, the superposed dye sheet and dye-receiving sheet are heated imagewise by a thermal head so that a portion of the dye of the dye layer is transferred imagewise in a desired amount to the dye-receiving layer, to form desired dye images on the dye-receiving layer. The dye sublimation transfer printer is particularly advantageous to form photograph-like full colored images with high gradation.

Also, in a hot melt ink thermal transfer printer, an ink transfer film (an ink sheet) having a layer of an ink which can be melted by heating and is coated on a film substrate and an ink-receiving medium, are superposed on each other by a platen under pressure so that the ink layer comes into contact with the ink-receiving medium, and the ink transfer film is heated imagewise at a back surface thereof to immediately melt the ink and thus the melted ink images are transferred onto the ink-receiving medium. In this printer, no thermal diffusion of the coloring material occurs, and thus the recorded ink images are formed with clear edges thereof and have a high sharpness and a high color depth. Also, for the ink, coloring pigments having high color fastnesses can be utilized. Therefore, the resultant colored images exhibit excellent light resistance and superior resistance to chemical reagents.

Among various cards, for example, magnetic cards and IC cards, in the use of ID cards, for example, membership cards or employee certificate cards, a performance of the cards such that picture information, for example, a photograph of face can be indicated by the dye sublimation transfer recording, and lateral information can be indicated by a hot melt ink transfer printing, is necessary. Namely, in the ID cards, the face photograph must be printed in full color with sublimating dyes and the literal information must be printed at a high clarity with the hot melt transfer inks.

In the printer for both the sublimating dye transfer printing and the hot melt ink transfer printing, ink sheets each having a hot melt ink-coated layer formed on a substrate film surface and comprising a cyan, magenta or yellow-coloring hot melt ink, and dye sheets each having a sublimating dye-coated layer formed on a substrate film surface and comprising a cyan, magenta or yellow-coloring sublimating dye, are employed.

In the image recording sheet for the sublimating dye and the hot melt ink, an image receiving layer capable of receiving and fixing both the sublimating dye images and the hot melt ink images, is formed on a surface of a substrate sheet. In the printing procedure, the dye or ink sheet is superposed on the image recording sheet in such a manner that the dye or ink-coated layer of the dye or ink sheet comes into contact with the image receiving layer of the image recording sheet, and the dye or ink sheet is heated imagewise at the back surface of the dye or ink sheet by a thermal head of the printer to cause the dye or ink in the dye or ink layer is thermally transferred imagewise in a desired amount to the image receiving layer of the recording sheet to form dye or ink images on the image receiving layer.

In the conventional sublimating dye and hot melt ink transfer printer now available, the recording cards are usually selected from polyvinyl chloride (PVC) cards and polyethylene terephthalate (PET) cards in which a recording surface is coated with PVC. However, in view of measures to prevent pollution of environment, PVC-free cards are strongly demanded. However, no chlorine-free polymeric material having similar performance to that of PVC has been provided. For example, PET cards are used in place of PVC cards, the sublimating dye-fixing property of the PET cards is poor, and the color density of the transferred hot melt ink images is low, and thus the PET cards cannot be employed practically. Thus, an attempt has been made to coat a surface of a substrate made from PET with a dye-receiving resin layer. When the dye-receiving resin layer is formed from a conventional non-polyvinyl chloride type resin, the sublimating dye can be received by the resin layer with a high dye-fixing efficiency, but the hot melt ink cannot be fully fixed on the resin layer.

The conventional polyvinyl chloride resin layer, which is currently believed to be a best dye and ink-receiving resin layer for both the sublimating dye and hot melt dye transfer printer, is disadvantageous in that photographic images formed from the sublimating dyes exhibit an unsatisfactory resolution and an insufficient light resistance.

Generally, the sublimating dye-receiving layer contains a silicone oil to prevent a fuse-adhesion of the dye sheet with the dye-receiving layer during printing procedure, and thus the silicon oil bleeds from the inside to the surface of the dye-receiving layer and is located on the surface. Therefore, the sublimating dyes can form dye images on the dye-receiving layer without occurring the fuse-sticking phenomenon of the dye-receiving layer with the dye sheet. However, the hot melt ink is repelled by the silicone oil and thus cannot be fixed to the dye-receiving layer. Also, in the conventional sublimating dye and hot melt ink transfer printer for IC cards, usually, after the sublimating dye images and the hot melt ink images are transferred on the dye and ink image receiving layer, an overlaminating layer is formed, as a protecting layer, on the image receiving layer. In this case, when the silicone oil is located on the image receiving layer surface, a problem that the overlaminating layer cannot be fixed to the image receiving layer occurs.

It is possible to enhance the fixing property of the hot melt ink to the image receiving layer by decreasing the content of the silicone oil in the image receiving layer. In this case, however, the resultant image receiving layer exhibits an increased frictional property and thus the recording sheets each having the image receiving layer exhibit an unsatisfactory travelling property through the printer, and when the sublimating dye printing is carried out, the recording sheet is sometimes fuse-adhered to the dye sheet and a sticking phenomenon occurs.

Also, since the conventional sublimating dye-receiving layer is formed from a coating liquid containing a solvent which is combustible, there is a danger of explosion or burning of the solvent-containing coating liquid during the coating procedure, and the solvent may cause the workers to be poisoned and the environment to be polluted.

To obtain images close to photographic images and having a high quality, an image recording sheet having a high gloss is required.

Japanese Unexamined Patent Publications No. 58-212,994, No. 62-173,295, No. 63-74,691 and No. 5-185,746 disclose methods of forming an image receiving layer of a dye sublimation thermal transfer recording sheet, in which method an activation energy ray-curable resin is utilized in place of a portion or all of a thermoplastic resin. These methods are, however, disadvantageous in that the color density of the sublimating dye images recorded on the image receiving layer is not always high sufficient to practice and the recording performance of individual dye sublimation thermal transfer recording sheet is unsatisfactory.

Also, Japanese Unexamined Patent Publications No. 5-301,473, No. 6-127,161, No. 6-155,941 and No. 10-264,335 disclose methods of forming an image receiving layer of a hot melt ink thermal transfer recording sheet by utilizing an activation energy ray-curable resin. In these methods, however, the activation energy ray-curable resin is used only for an intermediate adhesive layer between the image receiving layer and a substrate material but not for the image receiving layer per se, or, even when the resin is used for forming the image receiving layer, the resultant image receiving layer is disadvantageous in that the adhesion of the image receiving layer to the ink is poor, and thus the recorded ink images are easily peeled off therefrom.

Further, Japanese Unexamined Patent Publications No. 3-270,993 and No. 7-88,974 disclose image receiving layers capable of receiving both the sublimating dye images transferred by the dye sublimation thermal transfer printing procedure and the hot melt ink images transferred by the hot melt ink thermal transfer printing procedure. These methods, however, relate to a thermal transfer printing methods of colored images for preventing forgery, or to an image receiving layer containing chelating compound, and thus is disadvantageous in that the images of the sublimating dye by the dye-sublimation thermal transfer printing procedure and of the ink by the hot melt ink thermal transfer printing procedure have an unsatisfactory color density. These methods do not teach or suggest the formation of the specific image receiving layer of the present invention from a specific activation energy ray-curable monomers by an activation energy ray-irradiation procedure.

### SUMMARY OF THE INVENTION

An object of the present invention is to provide an image-printing sheet having a high gloss and a high resistance to fuse-adhesion, and enabling sublimating dyes and hot melt inks to be thermally transferred from dye sheet and ink sheet at a low printing energy and to form dye images and ink images having a high color density, a high clarity, a satisfactory gloss, and an image-printing method using the sheet.

Another object of the present invention is to provide an image-printing sheet which is free from chlorine-containing substances, has a printing performance comparable with conventional dye sublimating thermal transfer printing sheets and hot melt ink thermal transfer printing sheets, and is useful for sublimating dye and hot melt ink-printing IC cards, and an image-printing method for the sheet with the sublimating dyes and the hot melt ink. The above-mentioned objects can be attained by the image recording sheet of the present invention which comprises:
a support, and
an image receiving layer formed on at least one surface of the support and comprising an activation energy ray-curing product of an activation energy ray-curable resinous composition comprising at least one activation energy ray-curable organic compound having at least one chemical structure of the formula (1): 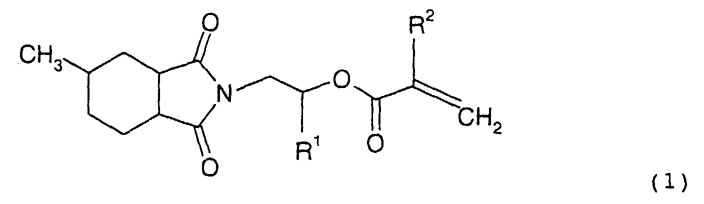 wherein R¹ and R² respectively and independently from each other represent a member selected from the group consisting of a hydrogen atom and a methyl group.

In the image recording sheet of the present invention, the activation energy ray-curable organic compound having the chemical structure of the formula (1) is present in an amount of 5% by weight based on the total weight of the activation energy ray-curable resinous composition.

In the image recording sheet of the present invention, the activation energy ray-curable organic compound having the chemical structure of the formula (1) is selected from the group consisting of 2-(4-methylhexahydrophthalimido)ethyl acrylate and 1-methyl-2-(4-methylhexahydrophthalimido)ethyl acrylate, 2-(4-methylhexahydrophthalimido) ethyl methacrylate and 1-methyl-2- (4-methylhexahydrophthalimido)ethyl methacrylate.

In the image recording sheet of the present invention, the activation energy ray-curable resinous composition further comprises at least one additional activation energy ray-curable organic compound.

In the above-mentioned image recording sheet of the present invention, wherein the additional activation energy ray-curable organic compound is selected from the group consisting of:
(1) acrylates and methacrylates of aliphatic, cycloaliphatic and aromatic mono-to hexa-hydric alcohols and of polyalkylene glycols;
(2) acrylates and methacrylates of addition reaction products of aliphatic, cycloaliphatic and aromatic mono-to hexa-hydric alcohols with alkylene oxides;
(3) polyacryloylalkylphosphorate esters and polymethacryloylalkylphosphorate esters;
(4) reaction products of polybasic acids with polyols and acrylic acid and/or methacrylic acid;
(5) reaction products of isocyanate compounds with polyols and acrylic acid and/or methacrylic acid;
(6) reaction products of epoxy compounds with acrylic acid and/or methacrylic acid;
(7) reaction products of epoxy compounds with polyols and acrylic acid and/or methacrylic acid; and
(8) reaction products of melamine with acrylic acid and/or methacrylic acid.

In the image recording sheet of the present invention, the additional activation energy ray-curable organic compound is selected from those represented by the general formula (2): 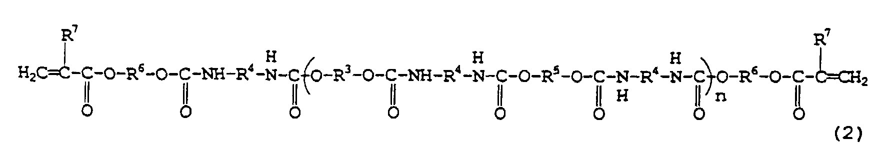 wherein -O-R³-O- represents a residue of a polymeric polyol compound having a molecular weight of 200 to 2,000, from which two terminal hydrogen atoms are removed, 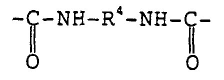 represents a residue of polyisocyanate compound, -O-R⁵-O- represents a residue of a dihydroxy compound from which two terminal hydrogen atoms are removed, CH₂=C(R⁷)COOR⁶O- represents a residue of a mono ester of a dihydroxyl organic compound (HO-R⁶-OH) with acrylic acid (CH₂=CHCOOH) or methacrylic acid (CH₂=C(CH₃)-COOH), from which monoester, a terminal hydrogen atom is removed, and n represents an integer of 1 to 100.

In the above-mentioned image recording sheet of the present invention, the activation energy rays are selected from ultraviolet rays and an electron beam.

The image recording method of the present invention on the image recording sheet as mentioned above comprises the steps of:
printing a portion of the image receiving layer surface with sublimating dye images by a dye sublimation thermal transfer printing procedure; and
printing another portion of the image recording layer surface with hot melt ink images by a hot melt ink thermal transfer printing procedure, the sublimation dye printing procedure and the hot melt ink printing procedure being carried out in any sequence.

### DESCRIPTION OF THE PREFERRED EMBODIMENTS

1. The image-printing sheet of the present invention comprises a support and an image receiving layer formed on at least one surface of the support and comprising an activation energy ray-curing product of an activation energy ray-curable resinous composition. The image-printing sheet of the present invention is characterized in that the activation energy ray-curable resinous composition comprises at least one activation energy ray-curable organic compound of the formula (1): 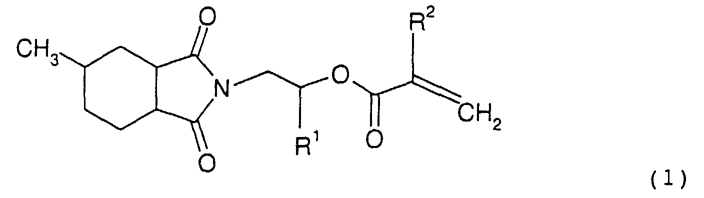 wherein R¹ and R² respectively and independently from each other represent a member selected from the group consisting of a hydrogen atom and a methyl group.

The resultant image receiving layer exhibits a high receiving property for the sublimating dyes and hot melt inks and a high resistance to fuse adhesion to ink or dye sheet.

The activation energy ray-curable organic compound usable for the present invention is an organic compound having a hexahydrophthalimide chemical structure, as represented by the general formula (1).

The activation energy ray-curable organic compounds represented by the general formula (1) are disclosed in Japanese Unexamined Patent Publications No. 50-59,481, No. 1-242,569, and No. 10-36,462. In these publications, these compounds are reported as a component useful for anaerobic curable resins, solder resists, coating resins and adhesive resins. These publications do not teach or suggest the utilization of the organic compounds of the general formula (1) as a component of image receiving layer of the image recording sheet for both the dye sublimation thermal transfer printing procedure and the hot melt ink thermal transfer printing procedure, and the advantages obtained by utilization of the organic compounds of the formula (1) as a resinous component of the sublimating dye and hot melt ink image receiving layer.

The reasons why the image receiving layer containing the organic compounds of the formula (1) can exhibit a high receiving property for both the sublimating dyes and the hot melt ink are not completely clear. The inventors of the present invention assume that the activation energy ray-curing products of the activation energy ray-curable organic compounds of the formula (1) having the hexahydrophthalimide chemical structure have a high affinity with both the sublimating dyes and the hot melt inks and thus can easily receive and fix the imagewisely transferred sublimating dyes and hot melt inks in the image receiving layer.

The activation energy ray-curable resinous composition usable for the present invention comprises at least one of the compounds of the general formula (1) and optionally, for the purpose of promoting the activation energy ray-curing reaction of the compounds of the formula (1), at least one additional activation energy ray-curable unsaturated organic compound different from those of the general formula (1). When the additional activation energy ray curable unsaturated organic compound is employed, the compound of the formula (1) should be contained in a content of 5% by weight or more, more preferably 30% by weight or more, based on the total weight of the activation energy ray-curable resinous composition. When the compounds of the formula (1) are employed in a mixture of two or more thereof, there is no specific limitation to the mixing weight ratio of the mixed compounds to each other.

In the image recording sheet of the present invention, the activation energy ray-curable organic compound represented by the formula (1) is preferably selected from the group consisting of 2-(4-methylhexahydrophthalimido)ethyl acrylate and 1-methyl-2-(4-methylhexahydrophthalimido)ethyl acrylate, 2-(4-methylhexahydrophthalimido) ethyl methacrylate and 1-methyl-2-(4-methylhexahydrophthalimido)ethyl methacrylate.

Also, the additional activation energy ray-curable organic compound is selected from the group consisting of:
(1) acrylates and methacrylates of aliphatic, cycloaliphatic and aromatic mono-to hexa-hydric alcohols and of polyalkylene glycols;
(2) acrylates and methacrylates of addition reaction products of aliphatic, cycloaliphatic and aromatic mono-to hexa-hydric alcohols with alkylene oxides;
(3) polyacryloylalkylphosphorate esters and polymethacryloylalkylphosphorate esters;
(4) reaction products of polybasic acids with polyols and acrylic acid and/or methacrylic acid;
(5) reaction products of isocyanate compounds with polyols and acrylic acid and/or methacrylic acid;
(6) reaction products of epoxy compounds with acrylic acid and/or methacrylic acid;
(7) reaction products of epoxy compounds with polyols and acrylic acid and/or methacrylic acid; and
(8) reaction products of melamine with acrylic acid and/or methacrylic acid.

The additional activation energy ray-curable unsaturated organic compounds usable together with the organic compounds of the formula (1), for the present invention preferably include methyl acrylate, ethyl acrylate, lauryl acrylate, stearyl acrylate, 2-ethylhexyl acrylate, 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, tetrahydrofurfuryl acrylate, tetrahydrofurfuryl methacrylate, caprolactone-modified tetrahydrofurfuryl acrylate, cyclohexyl acrylate, cyclohexyl methacrylate, dicyclohexyl acrylate, isobornyl acrylate, isobornyl methacrylate, benzyl acrylate, benzyl methacrylate, ethoxydiethyleneglycol acrylate, methoxytriethyleneglycol acrylate, methoxypropyleneglycol acrylate, phenoxypolyethyleneglycol acrylate, phenoxypolyethyleneglycol acrylate, phenoxypolypropyleneglycol acrylate, ethyleneoxide-modified phenoxy acrylate, N,N-dimethylaminoethyl acrylate, N,N-dimethylaminoethyl methacrylate, 2-ethylehexylcorbitol acrylate, ω-carboxypolycaprolactone monoacrylate, monohydroxyethyl acrylate phthalate, acrylic acid dimer, 2-hydroxy-3-phenoxypropyl acrylate, 9,10-epoxidized oleyl acrylate, ethyleneglycolmonoacrylate maleate, dicyclopentenyloxyethylene acrylate, acrylates of addition reaction products of 4,4-dimethyl-1,3-dioxolan with caprolactone, acrylates of addition reaction products of 3-methyl-5,5-dimethyl-1,3-dioxolan with caprolactone, polybutadiene acrylate, ethylenoxide-modified phenoxylated phosphoric acid acrylate, ethanediol diacrylate, ethanediol dimethacrylate, 1,3-propanediol diacrylate, 1,3-propanediol dimethacrylate, 1,4-butanediol diacrylate, 1,4-butanediol dimethacrylate, 1,6-hexanediol diacrylate, 1,6-hexanediol dimethacrylate, 1,9-nonanediol diacrylate, 1,9-nonanediol dimethacrylate, diethylenglycol diacrylate, polyethyleneglycol diacrylate, polyethyleneglycol dimethacrylate, polypropyleneglycol diacrylate, polypropyleneglycol dimethacrylate, neopentylglycol diacrylate, 2-butyl-2-ethylpropanediol diacrylate, ethylenoxide-modified bisphenol A diacrylate, polyethyleneoxide-modified bisphenol A diacrylate polyethyleneoxide-modified hydrogenated bisphenol A diacrylate, propyleneoxide-modified bisphenol A diacrylate, polypropyleneoxide-modified bishpenol A diacrylate, ethyleneoxide-modified isocyanuric acid acrylate, pentaerythritol diacrylate monostearate, 1,6-hexanediol diglycidylether-acrylic acid aduct, polyoxyethyleneepichlorohydrin-modified bisphenol A diacrylate, trimethylolpropane triacrylate, ethyleneoxide-modified trimethylolpropane triacrylate, polyethyleneoxide-modified trimethylolpropane triacrylate, propyleneoxide-modified trimethylolpropane triacrylate, polypropyleneoxide-modified trimethylolpropane triacrylate, pentaerythritol triacrylate, ethyleneoxide-modified isocyanuric acid triacrylate, ethyleneoxide-modified glycerol triacrylate, polyethyleneoxide-modified glycerol triacrylate, propylenoxide-modified glycerol triacrylate, polypropyleneoxide-modified glycerol triacrylate, pentaerythritol tetraacrylate, ditrimethylolpropane tetraacrylate, dipentaerythritol tetraacrylate, dipentaerythritol pentaacrylate, dipentaerythritol hexaacrylate, caprolactone-modified dipentaerythritol hexaacrylate, and polycaprolactone-modified dipentaerythritol hexaacrylate. The additional activation energy ray-curable organic compounds usable for the present invention are not limited to those mentioned above.

In the image-printing sheet of the present invention, activation energy ray-curable resins having (meth)acryloyl groups located at the terminals of each molecule and a number average molecular weight of about 400 to about 5,000 may be employed as a portion or all of the additional activation energy ray-curable unsaturated organic compounds.

There is no limitation to the (meth)acryloyl group-having additional activation energy ray curable resin, as long as the resins have the meth(acryloyl) group located at the terminals of the molecular and an average molecular weight of 400 to 5,000, and the resin is preferably selected from polyurethanepoly(meth) acrylate resins, for example, polyurethane-modified polyetherpoly(meth) acrylate resins and polyurethane-modified polyester poly(meth) acrylate resins. Particularly, the additional activation energy ray-curable resins may include those available under the trademarks of: PEG 1000, PEG 2000, PPG 400, PPG 700, PPG 1000, PPG 2000, PPG 3000, PTMG 650, PTMG 1000, PTMG 2000, PPG 700-MD, PPG 1000-MD, PPG 2000-MD, EGAA 1000, EGAA 2000, PGAA 1000, PGAA 2000, BGAA 1000, BGAA 2000, HGAA 1000, HGAA 2000, MPAA 1000, MPAA 2000 and NPAA 2000, OA130B, made by ARAKAWA KAGAKU K.K., and CJ 8-1, CJ 11-3, CJ 11-4 and K-7553, made by NIHON KASEI K.K., more preferably, the urethane unsaturated organooligomer represented by the general formula (2), disclosed in Japanese Unexamined Patent Publication No. 11-35,657 and made by KYOEISHA KAGAKU K.K. However, the additional activation energy ray-curable resins having the (meth)arryloyl groups located at the terminals of each molecule thereof are not limited to those mentioned above.

### General formula (2):

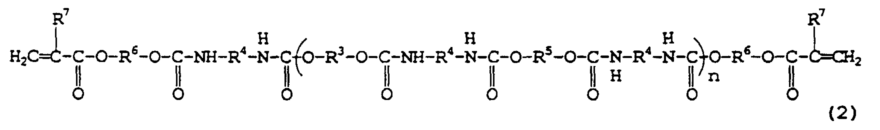

In the formula (2), -O-R³-O- represents a residue of a polymeric polyol compound having a molecular weight of 200 to 2,000, from which two terminal hydrogen atoms are removed, 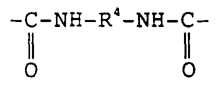 represents a residue of polyisocyanate compound, -O-R⁵-O- represents a residue of a dihydroxy compound from which two terminal hydrogen atoms are removed, CH₂=C(R⁷)COOR⁶O- represents a residue of a mono ester of a dihydroxyl organic compound (HO-R⁶-OH) with acrylic acid (CH₂=CHCOOH) or methacrylic acid (CH₂=C(CH₃)-COOH), from which monoester, a terminal hydrogen atom is removed, and n represents an integer of 1 to 100.

In the preparation of the urethane unsaturated organooligomer of the general formula (2), a polymer diol having a number average molecular weight of 200 to 2,000, a dihydroxyl group-containing compound and an organic poly isocyanate compound are addition-polymerized with each other to provide a urethane oligomer having hydroxyl groups located the two terminals of each molecule thereof. Then the hydroxyl group-having urethane oligomer is addition polymerized at the terminal isocyanate group thereof with a hydroxyl group-having (meth)acrylate ester to obtain the compound of the formula (2). In the compound of the formula (2), the group R³ may be replaced by the group R⁵.

In the formula (2), the structure (-OR³O-) formed by the reaction of the polymer diol has a number average molecular weight of 200 to 2,000, preferably 600 to 1500. The polymer diol is preferably selected from polyester diols, for example, polyethylene glycol, polypropylene glycol and polytetramethylene glycol; polyester diols, for example, esters of polyhydric alcohols with polybasic organic acids; polycarbonate diols, for example, hexamethylencarbonate diols and pentamethylenecarbonate diols; and polylactone diols, for example, polybutyrolactone diols and polycaprolactone diols. These polymer diols as mentioned above may be employed alone or in a mixture of two or more thereof.

The polyester polyol is a hydroxyl group-containing polyester (particularly a polyester diol) obtained by a reaction of a polyhydric alcohol with a polybasic carboxylic acid or a lower alkyl ester or anhydride thereof. The polyester component may be derived from a lactone. The polyhydric alcohols for the polyol component may be employed alone or in a mixture of two or more polyhydric alcohols. Usually, the polyol component comprises diol compounds, for example, polyesterdiols). The polyhydric alcohols for the preparation of the polyester polyols include, for example, aliphatic polyhydric alcohols, for example, C₂-C₁₀ alkylene diols such as ethylene glycol, trimethylene glycol; propylene glycol, 1,3-butane diol, tetramethylene glycol, hexamethylene glycol, neopentyl glycol, polyoxy-C₂-C₄ alkylene glycols such as diethyleneglycol, triethyleneglycol and polyoxytetramethyleneglycol; and polyols such as trimethylolpropane and pentaerithritol; cycloaliphatic polyhydric alcohols, for example, cycloaliphatic diol such as 1,4-cyclohexanedimethylol and hydrogenated bisphenol A; and aromatic polyhydric alcohols, for example, aromatic diols such as 2,2-bis(2-hydroxyethylphenyl)propane. The polyhydric alcohols may be employed alone or in a mixture of two or more thereof. The polyhydric alcohols are preferably selected from the aliphatic diols.

The polybasic carboxylic acids usable for the compound of the formula (2) include saturated aliphatic polybasic carboxylic acids, for example, saturated aliphatic dicarboxylic acids such as adipic acid, suberic acid, azelaic acid, sebacic acid, and dodecanedicarboxylic acid, and unsaturated aliphatic dicarboxylic acids such as maleic acid; cycloaliphatic polybasic carboxylic acid, for example, cycloaliphatic dicarboxylic acids such as 1,4-cyclohexane dicarboxylic acid; and aromatic polybasic carboxylic acids, for example, aromatic dicarboxylic acids, such as phthalic acid, terephthalic acid, isophthalic acid and 1,5-naphthalene dicarboxylic acid, and aromatic tri- or more basic carboxylic acids, such as trimellitic acid. The polybasic carboxylic acids may be employed alone or in a mixture of two or more thereof.

The lactones include butyrolactone, valerolactone and caprolactone. The lactones may be employed alone or in a mixture of two or more thereof.

The organic diisocyanate compounds for forming the group -R⁴- are preferably selected, for example, 2,4-tolylenediisocyanate, 2,6-tolylenediisocyanate, 4,4'-diphenylmethanediisocyanate, xylylenediisocyanate, isophoronediisocyanate, methylenebis(4-cyclohexylisocyante), tetramethylenediisocyanate, hexamethylendiisocyanate, trimethylhexamethylenediisocyanate, cyclohexane-1,3-dimethylenediisocyanate, cyclohexane-1,4-dimethylenediisocyanate; and 1, 5-naphthalenediisocyanate.

In the preparation of the compound of the formula (2), the organic diisocyanate compounds may be used alone or in a mixture of two or more thereof.

The dihydroxyl compounds from which the group -OR⁵O-in the formula (2) are preferably selected from glycols having 2 to 10 carbon atoms. Thus the group R⁵ represents a hydrocarbon group having 2 to 10 carbon atoms, preferably 2 to 6 carbon atoms. The C₂-C₁₀ glycols preferably include ethylene glycol, 1,3-butanediol, 1,4-butanediol, neopentyl glycol, 1,5-pentanediol, methylpentanediol, 1,6-hexanediol and 3-methyl-1,5-pentanediol.

The dihydroxyl compounds for forming the -OR⁵O-group preferably have at least one carboxyl group and two alcoholic hydroxyl groups located at two terminals of each molecule thereof. Among these dihydroxy-carboxylic compounds, straight or branched chain dihydroxyalkanoic polycarboxylic acids, for example, dimethylolpropionic acid and dimechylolbutanoic acid are preferably employed. In this case, the group -R⁵- represents a dehydrogenation residue of propionic acid or butanoic acid.

In the group "-(OR³O(O)CNHR⁴NHC(O)OR⁵O(O)CNHR⁴NHC(O)-)n" in the formula (2), the groups "-OR³O(O)CNHR⁴NHC(O)-OR⁵O(O)CNHR⁴NHC(O)-)" are repeating units of the urethane·unsaturated organooligomer of the formula (2), and n represents an integer of 1 to 100, preferably 1 to 10, more preferably 1 to 5.

The two terminal portions of the urethane·unsaturated organooligomer of the formula (2) are formed from (meth)acrylate ester structure having at least one double bond and represented by the formula "CH²=C(R⁷)C(O)OR⁶O-", R⁷ represents a hydrogen atom or a methyl group. The group "CH²=C(R⁷)C(O)OR⁶O-" is derived from hydroxyl group-containing (meth)acrylates, for example, 2-hydroxyethyl (meth)acrylate, 2-hydroxypropyl (meth)acrylate, 2-hydroxy-3-phenoxypropyl (meth)acrylate, hydroxybutyl (meth)acrylate, aducts of the above-mentioned (meth)acrylates with caprolactone or alkyleneoxides, glycerol mono(meth)acrylate, glycerol di(meth)acrylate, glycidyl methacrylate-acrylic acid aducts, trimethylolpropane mono(meth)acrylate, trimethylol di (meth ) acrylate, pentaerythritol tri(meth)acrylate, dipentaerythritol penta(meth)acrylate, trimethylolpropane tri(meth)acrylate, trimethylolpropane-alkyleneoxide aduct-di(meth)acrylates.

These compounds may be employed alone or in a mixture of two or more thereof.

The activation energy rays usable for curing the activation energy ray-curable resinous composition are preferably selected from ionizing radiations, for example, electron beam, ultraviolet rays and γ-rays. Among them, the electron beam and the ultraviolet rays are preferably utilized when the electron beam irradiation is carried out, preferably an electron beam accelerator having an acceleration voltage of 100 to 1,000 kV, more preferably 100 to 300 kV is employed and the electron beam absorption dose per pass is controlled to 0.5 to 20 Mrad, to obtain a sufficient permeation and curing effect of the electron beam. When the acceleration voltage and the electron beam dose are each lower than the above-mentioned ranges, the permeation of the electron beam may be too low and thus the inside portion of the electron beam curable composition layer of the image receiving layer may not be fully cured. Also, the acceleration voltage and the electron beam dose are each higher than the above-mentioned ranges, the energy efficiency for the irradiated electron beam may be insufficient and the substrate, the curable compound and additive mixed with the curable compound may be decomposed or deteriorated. Thus the resultant product may be affected. The electron beam accelerator may be selected from electrocurtain system, scanning type and double scanning type accelerators. The curtain beam system accelerator is relatively cheap and exhibits a large output and is preferably used for the present invention. In the curtain beam system accelerator, preferably, the acceleration voltage is 100 to 300 kV and the absorption dose is 0.5 to 10 Mrad.

In the electron beam irradiation, when the concentration of oxygen in the irradiation atmosphere is too high, the curing of the electron beam curable resinous composition is hindered, and thus, the air in the irradiation atmosphere is preferably replaced by an inert gas, for example, nitrogen, helium or carbon dioxide, to control the oxygen concentration of the irradiation atmosphere to 600 ppm or less, more preferably 500 ppm or less.

When an ultraviolet ray irradiation is applied, preferably, the power of the ultraviolet ray lamp is preferably 80 W/cm or more. For this purpose, a low pressure mercury lamp, a moderate pressure mercury lamp, a high pressure mercury lamp or a metal halide lamp are preferably employed. They may be of ozoneless type in which the generation of ozone is low.

In the ultraviolet ray-curable resinous composition, a photoinitiater for curing reaction may be contained. The photoinitiater preferably comprises at least one member selected from, for example, acetophenone compounds, for example, dichloroacetophenone and trichloroacetophenone, benzophenone, Michier' s ketone (4,4' -bis(dimethylamino)benzophenone, benzyl, benzoin, benzoin alkylethers, benzyl dimethylketal, tetramethylthiuram sulfide, thioxanthones and azo compounds.

The particular photoinitiaters for the curing reaction are, for example, 2,2-dimehoxy-1,2-diphenylethane-1-one (trademark: IRGACURE 651, made by CIBA-GAIGY), 1 hydroxy-cyclohexyl-phenyl-ketone (trademark: IRGACURE 184, made by CIBA-GAIGY), a eutectic mixture of (A) 1-hydroxy-cyclohexy-phenyl-ketone with (B) benzophenone (trademark: IRGACURE 500, made by CIBA-GAIGY), 2-methyl-1-[4-(methylthio)phenyl]-2-morpholinopropanone-1 (trademark: IRGACURE 907, made by CIBA-GAIGY), 2-benzyl-2-dimethylamino-1-(4-morpholinophenyl)-butanone-1 (trademark: IRGACURE 369, made by CIBA-GAIGY), 2-hydroxy-2-methyl-1-phenyl-propane-1-one (trademark: DAROCURE 1173, made by CIBA-GAIGY), a eutectic mixture of (A) 2-hydroxy-2-methy-1-phenyl-propane-1-one with (B) 2,4,6-trimethylbenzoyldiphenylphosphineoxide (trademark: DAROCURE 4265, made by CIBA-GAIGY), 1[4-(2-hydroxyethoxy)phenyl]-2-hydroxy-di-2-methyl-1-propane-1-one (trademark: IRGACURE 2959, made by CIBA-GAIGY), bis (cyclopentadienyl)-bis (2,6-difluoro-3-(pyr-1-yl)titanium one (trademark: CGI-784, made by CIBA-GAIGY), and a eutectic mixture of (A) 2-hydroxy-2-methyl-1-phenyl-propane-1-one with (B) bis-acylphosphineoxide (trademark: IRGACURE 1700, made by CIBA-GAIGY).

The photoinitiaters usable for the present invention are not limited to those mentioned above.

The image receiving layer is formed on a portion or all of a surface of a substrate for the image recording sheet. When the image receiving layer formed on a portion of the substrate surface, the resultant image receiving layer must be located on a desired portion of the resultant image recording sheet or card. Therefore, the formation of the image receiving layer is carried out after the substrate is formed into a desired sheet or card form. However, when the substrate is formed into the desired card form and then the image receiving layer is coated and heat-dried, sometimes the substrate is heat-deformed. Particularly, when the substrate is formed from an oriented porous thermoplastic film which enables the resultant image recording card to exhibit a high recording sensibility, the resultant card exhibits a low resistance to thermal deformation, and IC chips contained in the inside of the card may be broken.

When the image recording sheet is an IC card, and after an IC card substrate is formed in a desired form and then an image receiving layer on a portion or all of the substrate surface, the activation energy ray irradiation must be controlled so that the inner device such as the IC chip contained in the substrate is not affected by the irradiation. For this purpose, the ultraviolet ray irradiation is preferably applied.

The coating of the substrate surface with the activation energy ray-curable resinous composition can be effected by a conventional coating method, for example, a gravure coating or printing method.

The electron beam is advantageous in that the irradiation procedure thereof is easy, but is disadvantageous in that the inner device, for example, a IC chip, contained in the substrate may be affected. To avoid the disadvantage, the image receiving layer is formed on a portion of the substrate surface in which no inner device is arranged, or the irradiation energy of the electron beam is controlled so that the inner device in the substrate is not affected.

The image receiving layer formed by curing the layer of the activation energy ray-curable resinous composition formed on the substrate preferably has a thickness of 1 to 100 µm, more preferably 2 to 50 µm, which thickness is variable in response to the type and smoothness of the substrate. When the thickness is less than 1 µm, the resultant image receiving layer may be disadvantageous in that the receiving property for the sublimating dyes and the hot melt inks and the whiteness and the opaqueness of the image receiving layer may be insufficient, a thin, uniform coating layer may be difficult to form and thus the dye or ink images may be formed unevenly due to the rough surface of the substrate, the recorded images formed from two or more coloring dyes or inks superposed on each other may exhibit an unsatisfactory reproducibility of color-gradation. When the thickness is more than 100 µm, the image receiving layer having a high smoothness and a high uniformity may be difficult to form, and the resultant images may exhibit an unsatisfactory quality.

The image receiving layer of the present invention exhibits a high resistance to fuse adhesion to the dye or ink sheet and thus the image recording sheet of the present invention exhibit a high fuse adhesion resistance. To further enhance the fuse adhesion resistance, the image receiving layer may contain a silicon compound or activation energy ray-curable silicon compound which can be cured by irradiation of electron beam or ultraviolet rays. In this case, the silicon compound or activation energy ray-curable silicone compound is preferably contained in an amount of 2 to 15 parts by weight per 100 parts by weight of the activation energy ray-curable resinous composition.

The activation energy ray-curable resinous composition usable for the present invention optionally further contains an additive comprising at least one of antioxidants, ultraviolet ray-absorbers, dispersing agents, stabilizers, pigments and lubricants. Further, for the purpose of enhancing the whiteness or opaqueness of the image receiving layer, a white pigment may be added thereto and for the purpose of controlling the color tone of the image receiving layer, a fluorescent dye or coloring dye is optionally added thereto.

To form images having a high gloss, the activation energy ray-cured resin image receiving layer of the present invention may be formed on an additional image receiving layer formed from a thermoplastic resin by a solvent coating method.

Also, to prevent generation of static electricity on the image recording sheets forwarding through the printer and trouble in the sheet forwarding, an anti-static agent-containing coating layer may be formed at least one surface of the image recording sheet. The anti-static agent may contain a cationic hydrophilic polymeric compound.

To enhance the adhesive property and wetting property between the substrate and the image receiving layer, a surface treatment, for example, a corona discharge treatment or a precoat treatment may be applied to the substrate surface.

The back surface of the image recording sheet for the dye sublimation and hot melt ink thermal transfer printing may be coated with a resin coating layer by coating a polyolefin resin by a melt extrusion coating method; or with an activation energy ray-cured resin layer formed by coating the substrate back surface with an activation energy ray-curable resinous composition, and applying activation energy ray irradiation to the coated resinous composition layer; or with a backcoat layer for preventing curl generation or charge of static electricity or for imparting a hand writing property. The backcoat layer may contain a combination of a hydrophilic binder or latex with at least one of anti-static agents, curing agents, pigments and surfactants.

The substrate of the image recording sheet of the present invention is preferably formed from usual natural pulp paper sheets, coated paper sheets, laminated paper sheets, paper-like glass sheets, plastic films, synthetic fiber sheets, synthetic resin films, paper-like synthetic paper sheets and nonwoven fabrics. In the plastic films and synthetic paper sheets, a pigment comprising at least one member selected from, for example, clay, talc, kaolin, calcium carbonate, titanium dioxide, and magnesium hydroxide; a metal soap, for example, zinc stearate; a dispersing agent comprising one or more of various surfactants; and/or a coloring pigment is optionally contained. There is no limitation to the thickens of the substrate. Usually, the substrate has a high smoothness surface and preferably in a basis weight of 30 to 300 g/m².

For the purpose of smoothing the substrate surface and/or enhancing the whiteness and opaqueness of the substrate, a precoat layer may be formed between the substrate and the image receiving layer. For the precoat layer, an inorganic material comprising clay, talc, kaolin, and/or ansilex, and an organic material comprising a thermoplastic homopolymer or copolymer resin, for example, polyethylene resin (high density polyethylene, low density polyethylene, or middle density polyethylene resin), polypropylene resin, polybutene resin, polypentene resin, polyethylene terephthalate resin, or copolymer resin of two or more olefins, for example, ethylene-propylene copolymer resin, are employed. These resins may be employed alone or in a mixture of two or more thereof. Also, for the purpose of enhancing the close adhesion between the image receiving layer and the dye or ink sheet or the heat-insulating property of the image receiving layer, fine hollow solid particles may be contained in the image receiving layer.

For the preparation of the activation energy ray-curable resinous composition, a conventional kneader or mixer may be used. For example, two roll mixers, three roll mixers, a Caures disolver, homomixers, sand grinders, planetary mixers, ball mixers, kneaders, high speed mixers and homogenizers can be used. Also, ultrasonic dispersing machines can be used.

In the image recording sheet of the present invention, since the image receiving layer is prepared by coating an activation energy ray-curable resinous composition on a surface of the substrate and applying an irradiation of the activation energy rays, for example, ultraviolet rays or electron beam coated to the resinous composition layer, the resultant image receiving layer has a high smoothness and gloss of the surface thereof. To further enhance the smoothness and gloss of the image receiving layer surface, the image receiving layer surface, the image receiving layer of the activation energy ray cured resin is preferably formed by a cast EB method.

The activation energy ray-cured resin image receiving layer will be referred to a cured resin layer hereinafter.

In an example of the cast EB method, a liquid activation energy ray curable resinous composition is coated on a surface of a substrate sheet to form a coating liquid layer; the coated substrate sheet is superposed on a casting surface of a casting base in such a manner that the coated liquid layer surface comes into contact with the casting surface; irradiation by the activation energy rays, for example, an electron beam, is applied to the coated liquid layer on the casting surface through the substrate sheet to cure the coating liquid layer and to bond the resultant cured resin layer to the substrate sheet; and then the cured resin layer bonded to the substrate sheet is separated from the casting surface of the casting base. This method is referred to as a direct coating method. In another example of the cast EB method, a casting surface of a casting base is coated with a liquid activation energy ray-curable resinous composition to form a coating liquid layer on the casting surface; a substrate sheet is superposed on the coating liquid layer; an irradiation of activation energy rays, for example, electron beam, is applied to the coating liquid layer through the substrate sheet, to cure the coating liquid layer and to bond the resultant cured resin layer to the substrate sheet and; finally, the resultant image recording sheet is separated from the casting surface of the casting base.

The casting base usable for the casting process for producing the image recording sheet of the present invention may be in the form of a roll or a sheet, the material for forming the casting surface of the casting base may be a metallic material or a plastic material. For example, the casting base may be a rotatable drum having a peripheral surface formed from a stainless steel, copper, or chromium. In this case, the casting peripheral surface is preferably a mirror-finished smooth surface. Also, to make the separation of the cured resin layer (image receiving layer) from the casting surface of the casting base easy, a silicone oil or a wax may be fed onto the peripheral surface of the metal-made rotatable drum. In the casting sheet material usable as a casting base, there is no limitation to the material for forming the casting sheet material, as long as the sheet material has a smooth surface and a high flexibility. Particularly, as a casting sheet material, plastic resin films, for example, polyester films, metal sheets, resin-coated paper sheets, metallized plastic resin films and metallized paper sheets are preferably employed. To promote the separation of the image receiving layer from the casting sheet material, a releasing agent, for example, a silicone or wax may be fed onto the casting surface of the casting sheet material. Alternatively, the casting surface of the sheet material is treated with a releasing agent, for example, a silicone releasing agent, to make easy the separation of the resultant cured image receiving layer from the casting surface. The casting sheet material may be formed into an endless belt form. The casting sheet material may be repeatedly employed as a casting base. Since the repeated irradiations of the activation energy rays causes the casting sheet material to be deteriorated, there is a limitation to the practical re-uses of the casting sheet material.

The method of coating the activation energy ray-curable resinous composition of the present invention on the casting surface of the rotatable casting drum or the casting sheet material or on the surface of the substrate is selected from conventional coating methods, for example, blade coating method, air doctor coating method, squeeze coating method, air knife coating method, roll coating method, gravure coating method, transfer coating method, spray coating method, comma coating method, smoothing coating method, microgravure coating method, reverse roll coating method, multi-roll coating method, dip-coating method, kiss-coating method, gate roll coating method, extrusion coating method, curtain coating method, falling curtain coating method, slide coating method, fountain coating method and slit die coating method.

After the activation energy ray-curable resinous composition is coated on a substrate and cured, the cured resin layer may be smoothed by a calendering treatment, for example, a supercalendering treatment.

When a rotatable metal drum is used as a casting base, to protect the casting surface of the rotatable drum from damage, the coating procedure is preferably carried out by the roll coating method or the offset gravure method in which a rubber roll is used as a coating roll. Also, a non-contact type coating method, for example, the fountain coating method or a slit die coating method, is advantageously used. Further when the image receiving layers are locally formed on portions of the substrate surface, the gravure coating method, or other printing methods can be utilized.

In the image receiving method of the present invention;
a portion of the image receiving layer surface of the image recording sheet of the present invention is printed with sublimating dye images by a dye sublimation thermal transfer printing procedure; and
another portion of the image recording layer surface is printed with hot melt ink images by a hot melt ink thermal transfer printing procedure, the sublimation dye printing procedure and the hot melt ink printing procedure being carried out in any sequence.

The sublimating dye printing procedure and the hot melt ink printing procedure can be carried out in accordance with the conventional printing procedures.

### EXAMPLES

The present invention will be further illustrated by the following examples which do not cause the scope of the present invention to be restricted in any way.

### Example 1

A substrate sheet consisting of white-colored polyethylene terephthalate (PET) film having a thickness of 150 µm (trademark: U-298, made by TEIJIN LTD.) was surface activated by a corona discharge treatment.

Separately, an activation energy ray-curable resinous coating composition was prepared by mixing 80 parts by weight of 2-(4-methylhexahydrophthalimido)ethyl acrylate which is an acrylic monomer having the chemical structure of the general formula (1) with 20 parts by weight of an urethane-unsaturated organooligomer having the chemical structure of the general formula (2) in which R³ = a polycaprolactonediol residue having a number average molecular weight of 500, R⁴ = isophorondiisocyanate residue, R⁵ = -CH₂CH₂- group, R⁶ = -CH₂CH₂- group, R⁷ = H, n = 2, having a number average molecular weight of 2,500, and available under trademark of UF502LE, made by KYOEISHA KAGAKU K.K.

The coating resinous composition was coated on the corona discharge-treated surface of the PET film by using a Meyer bar to form a resinous composition layer in a dry weight after curing of 5.0 g/m².

Then, a casting base consisting of a silicone-coated polyester film having a thickness of 75 µm (trademark: SP-PET-05-75B, made by TOSERO K.K.) was superposed on the coated PET film in such a manner that the resinous composition layer on the PET film came into contact with the casting surface of the casting base, under pressure. Then, an electron beam was irradiated toward the resinous composition layer through the casting base (silicone-coated polyester film) at an acceleration voltage of 175 kV at an absorption ray dose of 4 Mrad in a gas atmosphere having an oxygen content of 500 ppm or less, to cure the resinous composition layer, and to bond the resultant cured resin layer (image receiving layer) with the substrate sheet surface. Thereafter, the silicone-coated polyester film used as a casting base was separated from the electron beam-cured resin layer.

An image recording sheet having a electron beam-cured image receiving layer was obtained.

### Example 2

An image recording sheet having an image receiving layer comprising an electron beam-cured resin was prepared by the same procedures as in Example 1 with the following exceptions.

In the preparation of the coating resinous composition, 80 parts by weight of 2-(4-methylhexahydrophthalimido)ethyl acrylate was replaced by 80 parts by weight of 1-methyl-2-(4-methylhexahydrophthalimido) ethyl acrylate.

### Example 3

An image recording sheet having an image receiving layer comprising an electron beam-cured resin was prepared by the same procedures as in Example 2 with the following exceptions.

In the cast coating procedure, the silicone-coated polyester film having a thickness of 75 µm (trademark: SP-PET-05-75B, made by TOSERO K.K.) was replaced by a polyester film having a thickness of 75 µm (trademark: LUMILER T-150, made by TORAY K.K.)

### Example 4

An image recording sheet having an image receiving layer comprising an electron beam-cured resin was prepared by the same procedures as in Example 1 with the following exceptions.

In the preparation of the coating resinous composition, 20 parts by weight of the urethane·unsaturated organooligomer UF502L was replaced by 20 parts by weight of an oligomer of the formula (2) in which R³ = polycaprolactonediol residue having a number average molecular weight of 500, R⁴ = isophorone diisocyanate residue, R⁵ = -CH₂CH₂- group, R⁶ = -CH₂CH₂-group, R⁷ = H, n = 3, having a number average molecular weight of 3,500, and available under trademark of UF503LE from KYOEISHA KAGAKU K.K.

### Example 5

An image recording sheet having an image receiving layer comprising an electron beam-cured resin was prepared by the same procedures as in Example 1 with the following exceptions.

In the preparation of the coating resinous composition, 20 parts by weight of the urethane·unsaturated organooligomer UF502LE was replaced by 20 parts by weight of an oligomer of the formula (2) in which R³ = polycaprolactonediol residue having a number average molecular weight of 500, R⁴ = isophorone diisocyanate residue, R⁵ = -CH₂C(CH₃)₂CH₂- group, R⁶ = - CH₂CH₂- group, R⁷ = H, n = 2, having a number average molecular weight of 2,500, and available under a trademark of UF502LN, from KYOEISHA KAGAKU K.K.

### Example 6

An image recording sheet having an image receiving layer comprising an electron beam-cured resin was prepared by the same procedures as in Example 1 with the following exceptions.

In the preparation of the coating resinous composition, 80 parts by weight of 2-(4-methylhexahydrophthalimido)ethyl acrylate of the formula (1) was replaced by 60 parts by weight of 1-methyl-2-(4-methylhexahydrophthalimido)ethyl acrylate and 20 parts by weight of 2-(4-methylhexahydrophthalimido)ethyl acrylate.

### Example 7

An image recording sheet having an image receiving layer comprising an electron beam-cured resin was prepared by the same procedures as in Example 1 with the following exceptions.

In the preparation of the coating resinous composition, 80 parts by weight of 2-(4-methylhexahydrophthalimido)ethyl acrylate of the formula (1) was replaced by 20 parts by weight of 1-methyl-2-(4-methylhexahydrophthalimido)ethyl acrylate and 60 parts by weight of 2-(4-methylhexahydrophthalimido)ethyl acrylate.

### Example 8

An image recording sheet having an image receiving layer comprising an electron beam-cured resin was prepared by the same procedures as in Example 1 with the following exceptions.

In the preparation of the coating resinous composition, 20 parts by weight of the urethane·unsaturated organooligomer UF502LE were replaced by 20 parts by weight of an urethane-modified acrylate origomer of neopentylglycol adipate with a molecular weight of 1,000, available under the trademark: OA130B, from ARAKAWA KAGAKU K.K.

### Example 9

An image recording sheet having an image receiving layer comprising an electron beam-cured resin was prepared by the same procedures as in Example 1 with the following exceptions.

In the preparation of the coating resinous composition, 20 parts by weight of the urethane·unsaturated organooligomer UF502LE were replaced by 20 parts weight of trimethylolpropane triacrylate (trademark: M309, made by TOA GOSEI K.K.)

### Example 10

A polyester film having a thickness of 150 µm (trademark: LUMILER T-150, made by TORAY K.K.) was laminated at a surface thereof with an art paper sheet having a basis weight of 79 g/m² (trademark: ULTRA KINFUJI, made by OJI PAPER CO.), and the opposite surface of the polyester film was subjected to a corona discharge treatment.

Separately, a coating resinous composition was prepared from 70 parts by weight of an acryl monomer of the general formula (1), namely, 2-(4-methylhexahydrophthalimido)ethyl acrylate and 30 parts by weight of the urethane·unsaturated organo-oligomer (UF502LE).

The coating resinous composition was coated on the corona discharge-treated surface of the polyester film, by using a Meyer bar, to form a coating resinous composition layer in a cured resin amount of 6.0 g/m². The cured resin layer was superposed by a casting base film consisting of a silicone-coated polyester film having a thickness of 75 µm under pressure, and an electron beam irradiation was applied to the resinous composition layer brought into contact with the silicone-coated polyester film through the silicone coated polyester film at an acceleration voltage of 175 kV at an absorption ray dose of 4 Mrad in a gas atmosphere having an oxygen content of 500 ppm or less, to cure the resinous composition layer and to bond the resultant cured resin layer (image receiving layer) to the art paper sheet-laminated polyester film.

Then the cured resin layer was separated from the silicone-coated, polyester film.

An image recording sheet was obtained.

### Example 11

A surface of a cast-coated paper sheet having a basis weight of 128 g/m² (trademark: MIRROR COAT GOLD, made by OJI PAPER CO.) was subjected to a corona discharge treatment.

A resinous coating composition consisting of 10 parts by weight of 2-(4-methylhexahydrophthalimido)ethyl acrylate of the general formula (1), 90 parts by weight of tripropyleneglycol diacrylate (trademark: M220, made by TOA GOSEI K.K.), 8 parts by a photopolymerization initiator consisting of 2,2-dimethoxy-1,2-diphenyl-ethane-1-one (trademark: IRGACURE 651, made by CIBA-GAIGY) was coated by using a Meyer bar on the corona discharged surface of the cast-coated paper sheet, to form a resinous composition layer in a cured dry weight of 6.0 g/m². The coated resinous composition was cured by irradiation of ultraviolet rays at a radiation power of 120 W/cm, at a radiation distance of 10 cm.

An image recording sheet was obtained.

### Comparative Example 1

An image recording sheet having an image receiving layer comprising an electron beam-cured resin was prepared by the same procedures as in Example 1 with the following exceptions.

In place of the compound of the general formula (1), 2-ethylhexylcarbitol acrylate, which is an acrylate compound different from the compounds of the formula (1), was employed.

### Comparative Example 2

An image recording sheet having an image receiving layer comprising an electron beam-cured resin was prepared by the same procedures as in Comparative Example 1 with the following exceptions.

The 2-ethylhexylcarbitol acrylate used in Comparative Example 1 was replaced by isobornyl acrylate which is an acrylate compound different from the compounds of the general formula (1).

### Comparative Example 3

An image recording sheet having an image receiving layer comprising an electron beam-cured resin was prepared by the same procedures as in Example 1 with the following exceptions.

2-(4-methylhexahydrophthalimido)ethyl acrylate used in Example 1 was replaced by 2-(2,3,6,7-tetrahydrophthalimido)ethyl acrylate which is an acrylate compound different from the compounds of the general formula (1).

### Comparative Example 4

An image recording sheet having an image receiving layer comprising an electron beam-cured resin was prepared by the same procedures as in Example 11 with the following exceptions.

In place of 10 parts by weight of 2-(4-methylhexahydrophthalimido)ethyl acrylate, 90 parts by weight of tripropyleneglycol diacrylate and 8 parts by weight of a photopolymerization initiator consisting of 2,2-dimethoxy-1,2-diphenylethane-1-one (trademark: IRGACURE 651, made by CIBA-GAIGY), 30 parts by weight of tolyloxyethyl acrylate which is a mono acrylate compound different from the compounds of the general formula (1), 5 parts by weight of pentaerithritol triacrylate, 0.5 part of a silicone diacrylate (trademark: EBECRYL 350, made by DAICEL UCB) 65 parts by weight of an urethane acrylate oligomer (trademark: 100 UVU820-OL, made by SANYO KASEI K.K.) and 5 parts by weight of a photopolymerization initiator consisting of 1-hydroxycyclohexylphenylketone, were employed.

### Comparative Example 5

An image recording sheet having an image receiving layer comprising an electron beam-cured resin was prepared by the same procedures as in Comparative Example 4 with the following exceptions.

In the preparation of the coating resinous composition, the content of tolyloxyethyl acrylate was changed from 30 parts to 45 parts by weight, the content of pentaerythritol triacrylate was changed from 5 parts to 10 parts by weight, and 65 parts of the urethane acrylate oligomer (trademark: 100 UVU820-OL, made by SANYO KASEI K.K.) were replaced by 35 parts by weight of MACROMONOMER AN-6 (trademark, macromonomer of an oligomer comprising as a principal component, a copolymer of styrene with acrylonitril and a methacryloyl group attached to one side terminal of each molecule thereof, and having a number average molecular weight of about 6,000, made by TOA GOSEIKAGAKU K.K.) and 10 parts by weight of N-vinyl pyrrolidone..

### Comparative Example 6

An image recording sheet having an image receiving layer comprising an electron beam-cured resin was prepared by the same procedures as in Example 11 with the following exceptions.

A surface of a synthetic paper sheet having a thickness of 150 µm (trademark: FPG-150, made by OJI YUKA GOSEISHI K.K.) was treated by a corona discharge treatment, and thereafter was coated with a mixture of 10 parts by weight of a polyester resin (trademark: VYLON 200, made by TOYOBO K.K.) having a Tg of 67°C, 0.3 part of an amino-modified silicone compound (trademark: KF-393, made by SHINETSU SILICONE K.K.), 0.5 part of a thermosetting polyisocyanate having a NCO group content of about 11.5% by weight (trademark: TAKENATE D 110N, made by TAKEDA YAKUHINKOGYO K.K.) and 45 parts by weight of toluene, 45 parts by weight of methylethylketone and 40 parts by weight of cyclohexanone, by using a Meyer bar, to form a composition layer in a cured dry amount of 5.0 g/m². The composition layer was dried in a hot air drier at a temperature of 120°C for one minute, and was aged at a temperature of 50°C for 48 hours. An image recording sheet was obtained.

### Comparative Example 7

An image recording sheet having an image receiving layer comprising an electron beam-cured resin was prepared by the same procedures as in Comparative Example 6 with the following exceptions.

In the preparation of the coating composition the content of the amino-modified silicone compound (KF-393, made by SHINETSU SILICONE K.K.) was changed from 0.3 to 0.2 part by weight.

### TESTS

The image recording sheets of Examples 1 to 11 and Comparative Examples 1 to 7 were subjected to the following tests.

### (1) Sublimating dye-receiving property

A sample of each image recording sheet was printed by a dye sublimation and hot melt ink thermal transfer color printer (model: NCP-100, made by NOZAKI INSATSU SHIGYO K.K.) using sublimating dye ribbons for yellow, magenta and cyan-coloring sublimating dyes and hot melt ink ribbon for black-coloring ink, each ribbon is top-coated by an overlamination layer. In the dye sublimation thermal transfer printing procedure, black-colored images were printed by superposing yellow-, magenta and cyan-coloring inks on each other, in four gradation patterns.

The sublimating dye-receiving property of the recording sheet was evaluated by the highest color density of the mixed dye black images measured by Mcbeth Reflection Color Density Tester (model: RD-914).

The hot melt ink thermal transfer printing procedure was carried out by using a hot melt black-coloring ink.

The hot melt ink-receiving property of the recording sheet was evaluated as follows.

| Class | Hot melt ink-receiving property |
|---|---|
| 3 | Ink images have no defect and a high color density. |
| 2 | Ink images are slightly defective. |
| 1 | Ink images are significantly defective. |

### (2) Resistance to fuse-adhesion to dye or ink sheet

| Class | Fuse-adhesion |
|---|---|
| 3 | No fuse-adhesion is found |
| 2 | Slight fuse-adhesion is noticed. Portions of the sublimating dye sheet are adhered to image receiving layer. |
| 1 | Significant fuse-adhesion occur Printing procedure is discontinued |

### (3) Resistance to sticking phenomenon during printing

| Class | Sticking |
|---|---|
| 3 | No sticking phenomenon |
| 2 | Sticking noise slightly generated |
| 1 | Significant sticking noise generated and dye or ink sheet is broken |

### (4) Adhesion of overlamination layer

Immediate after printing, the recorded images are rubbed with erasing rubber 20 times. The erasing results are observed by the naked eye and evaluated as follows

| Class | Adhesion of over lamination |
|---|---|
| 3 | No separation of over lamination layer is found |
| 2 | Over lamination layer is slightly removed |
| 1 | Over lamination layer is removed |

The test results are shown in Table 1.

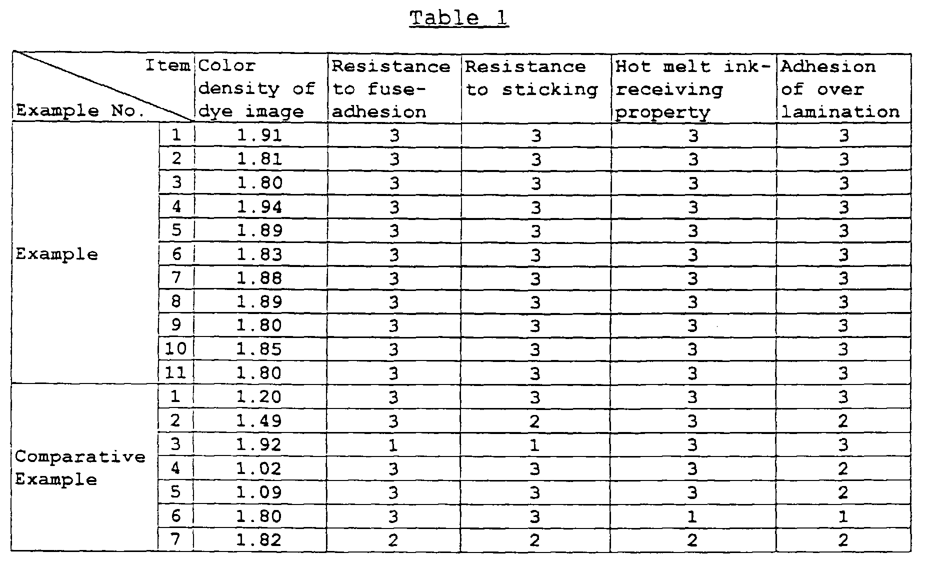

In Examples 1 to 11 wherein the hydrophthalimido structure-having compound of the general formula (1) is contained in the image receiving layer, the color density of the sublimating dye images and the resistance to the fuse adhesion of the image receiving layer to the dye or ink sheet were good.

In Comparative Example 1 wherein 2-(4-methylhexahydrophthalimido)ethyl acrylate of the formula (1) was replaced by 2-ethylhexylcarbitol acrylate, the color density of the dye images was unsatisfactory.

In Comparative Example 2 in which 2-(4-methylhexahydrophthalimido)ethyl acrylate was replaced by isobornyl acrylate, the color density of the dye images and the resistance to fuse-adhesion of the image receiving layer were insufficient.

In Comparative Example 3 in which 2-(4-methylhexahydrophthalimido)ethyl acrylate was replaced by 2-(2,3,6,7-tetrahydrophthalimido)ethyl acrylate, the resultant coating composition exhibited a high viscosity and thus was difficult to coat and although the color density of the dye images was satisfactory, the resistance to fuse adhesion of the image receiving layer was very bad.

In Comparative Examples 4 and 5 wherein tolyloxyethyl acrylate and pentaerythritol triacrylate were respectively employed in place of the compound of the formula (1), the resistance to fuse adhesion was good, but the color density of the dye images was very low.

In Comparative Example 6 wherein a solvent type and thermally cross-linking polyester resin was employed in place of the compound of the formula (1), the sublimating dye could be fixed but the hot melt ink was repelled by the image receiving layer and could be fixed at a high color density, and the over lamination layer could not be firmly fixed to the image receiving layer.

In Comparative Example 7 in which the content of the silicone compound in the ink-receiving layer is lower than that in Comparative Example 6, the fixing property of the hot melt ink to the image receiving layer is enhanced, but during the sublimating dye thermal transfer printing procedure, slight fuse adhesion occurred.

Table 1 clearly shows that in the image recording sheet of the present invention having an image receiving layer which comprises a specific activation energy ray-curing product of the activation energy ray-curable organic compound of the general formula (1), both the sublimating dyes and the hot melt inks can be printed by the conventional dye sublimation and hot melt ink thermal transfer printing procedures. Also, the image receiving layer exhibits a high dye and hot melt ink-receiving property, a high resistance to fuse adhesion to the dye sheet or hot melt ink sheet, and a high gloss.

## Claims

1. An image recording sheet comprising:
a support, and
an image receiving layer formed on at least one surface of the support and comprising an activation energy ray-curing product of an activation energy ray-curable resinous composition comprising at least one activation energy ray-curable organic compound represented by the formula (1): 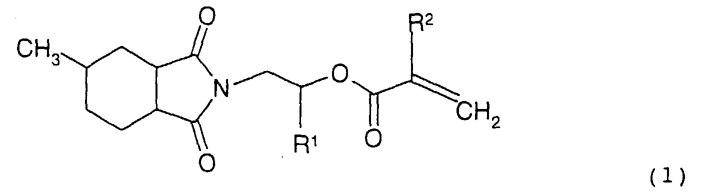 wherein R¹ and R² respectively and independently from each other represent a member selected from the group consisting of a hydrogen atom and a methyl group.

2. The image recording sheet as claimed in claim 1, wherein the activation energy ray-curable organic compound having the chemical structure of the formula (1) is present in an amount of 5% by weight based on the total weight of the activation energy ray-curable resinous composition.

3. The image recording sheet as claimed in claim 1, wherein the activation energy ray-curable organic compound having the chemical structure of the formula (1) is selected from the group consisting of 2-(4-methylhexahydrophthalimido)ethyl acrylate and 1-methyl-2-(4-methylhexahydrophthalimido)ethyl acrylate, 2-(4-methylhexahydrophthalimido)ethyl methacrylate and 1-methyl-2-(4-methylhexahydrophthalimido)ethyl methacrylate.

4. The image recording sheet as claimed in claim 1, wherein the activation energy ray-curable resinous composition further comprises at least one additional activation energy ray-curable organic compound.

5. The image recording sheet as claimed in claim 4, wherein the additional activation energy ray-curable organic compound is selected from the group consisting of:
(1) acrylates and methacrylates of aliphatic, cycloaliphatic and aromatic mono-to hexa-hydric alcohols and of polyalkylene glycols;
(2) acrylates and methacrylates of addition reaction products of aliphatic, cycloaliphatic and aromatic mono-to hexa-hydric alcohols with alkylene oxides;
(3) polyacryloylalkylphosphorate esters and polymethacryloylalkylphosphorate esters;
(4) reaction products of polybasic acids with polyols and acrylic acid and/or methacrylic acid;
(5) reaction products of isocyanate compounds with polyols and acrylic acid and/or methacrylic acid;
(6) reaction products of epoxy compounds with acrylic acid and/or methacrylic acid;
(7) reaction products of epoxy compounds with polyols and acrylic acid and/or methacrylic acid; and
(8) reaction products of melamine with acrylic acid and/or methacrylic acid.

6. The image recording sheet as claimed in claim 4, wherein the additional activation energy ray-curable organic compound is selected from those represented by the general formula (2): the general formula (2): 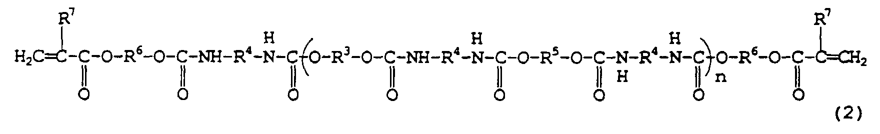 wherein -O-R³-O- represents a residue of a polymeric polyol compound having a molecular weight of 200 to 2,000, from which two terminal hydrogen atoms are removed, 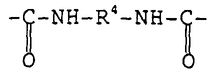 represents a residue of polyisocyanate compound, -O-R⁵-O- represents a residue of a dihydroxy compound from which two terminal hydrogen atoms are removed, CH₂=C(R⁷)COOR⁶O- represents a residue of a mono ester of a dihydroxyl organic compound (HO-R⁶-OH) with acrylic acid (CH₂=CHCOOH) or methacrylic acid (CH₂=C(CH₃)-COOH), from which monoester, a terminal hydrogen atom is removed, and n represents an integer of 1 to 100.

7. The image recording sheet as claimed in claim 1, wherein the activation energy rays are selected from ultraviolet light and an electron beam.

8. An image recording method on the image recording sheet as claimed in claim 1, comprising the steps of printing a portion of the image receiving layer surface with sublimating dye images by a dye sublimation transfer printing procedure; and
printing another portion of the image recording layer surface with hot melt ink images by a hot melt ink transfer printing method, the sublimation dye printing procedure and the hot melt ink printing procedure being carried out in any subsequence.
